(19)

Europäisches
Patentamt
European
Patent Office
Office européen
des brevets

(11) **EP 4 667 798 A1**

(12) **EUROPEAN PATENT APPLICATION**
published in accordance with Art. 153(4) EPC

(43) Date of publication:
**24.12.2025 Bulletin 2025/52**

(21) Application number: 23922832.3

(22) Date of filing: **12.09.2023**

(51) International Patent Classification (IPC):
**F16L 15/04** *(2006.01)* **E21B 17/00** *(2006.01)*

(52) Cooperative Patent Classification (CPC):
**E21B 17/00; F16L 15/04**

(86) International application number:
**PCT/JP2023/033179**

(87) International publication number:
**WO 2024/171498 (22.08.2024 Gazette 2024/34)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.02.2023 JP 2023020507**

(71) Applicants:
• **NIPPON STEEL CORPORATION**
**Chiyoda-ku**
**Tokyo 100-8071 (JP)**
• **Vallourec Oil and Gas France**
**59620 Aulnoye-Aymeries (FR)**

(72) Inventors:
• **INOSE, Keita**
**Tokyo 100-8071 (JP)**
• **OGAWA, Masahiro**
**Tokyo 100-8071 (JP)**
• **MORISHIGE, Yuya**
**Tokyo 100-8071 (JP)**
• **KURIO, Satoshi**
**Tokyo 100-8071 (JP)**
• **MARUTA, Satoshi**
**Tokyo 100-8071 (JP)**

(74) Representative: **J A Kemp LLP**
**80 Turnmill Street**
**London EC1M 5QU (GB)**

(54) **THREADED JOINT FOR STEEL PIPES**

(57) The threaded connection includes a pin (10) and a box (20). The pin (10) and the box (20) fastened to each other include a thread part (101), an inner seal part (102), and an outer seal part (103). A ratio value Lth of an amount of interference δth in the thread part (101) with respect to tan(θth) where θth is a gradient angle of the thread part (101), a ratio value Lint of an amount of interference δint in the inner seal part (102) with respect to tan(θint) where θint is a gradient angle of the inner seal part (102), and a ratio value Lext of an amount of interference δext in the outer seal part (103) with respect to tan(θext) where θext is a gradient angle of the outer seal part (103) satisfy the following Condition (1) or Condition (2).

$$Lth > Lext \text{ and } Lint \neq Lth \qquad (1)$$

$$Lth > Lint \text{ and } Lext \neq Lth \qquad (2)$$

FIG.1

EP 4 667 798 A1

## Description

TECHNICAL FIELD

The present invention relates to a threaded connection for steel pipe.

BACKGROUND ART

In an oil well, natural gas well, and the like (hereafter, collectively referred to as an "oil well"), steel pipes called oil country tubular goods (OCTG) are used to mining underground resources. The steel pipes are connected one by one. For connecting the steel pipes, threaded connections are used.

Types of the threaded connection for steel pipe are roughly categorized into a coupling type and an integral type. In a case of a threaded connection of the coupling type, one of tubes in a pair to be connected is a steel pipe, and the other one is a coupling. In this case, external thread parts are formed on outer circumferences of both end portions of the steel pipe, and internal thread parts are formed on inner circumferences of both end portions of the coupling. One of the external thread parts of the steel pipe is then screwed into one of the internal thread parts of the coupling, and the steel pipe and the coupling are thereby fastened and connected to each other. In a case of a threaded connection of the integral type, tubes in a pair to be connected are both steel pipes. In this case, an external thread part is formed on an outer circumference of one end portion of each of the steel pipe, and an internal thread part is formed on an inner circumference of the other end portion. The external thread part of one of the steel pipes is then screwed into the internal thread part of the other of the steel pipes, and both steel pipes are thereby fastened and connected to each other.

An end portion of a tube with an external thread part is called a pin because the end portion includes an element to be inserted into an internal thread part. In contrast, an end portion of a tube with an internal thread part is called a box because the end portion includes an element to receive an external thread part. The pin and box are end portions of tubes, and both are therefore tubular.

As a threaded connection for steel pipe, a taper thread is adopted. Therefore, an external thread part of a pin is a taper external thread part. An internal thread part of a box is a taper internal thread part. The taper external thread part and the taper internal thread part mesh with each other to form a thread part. The taper thread is a trapezoid thread typified by, for example, a buttress thread specified in the API standard. In a case of the trapezoid thread, an external thread part and an internal thread part each include a crest, a root, a load flank, and a stabbing flank.

In general, a pin and a box each include a shoulder surface. When a pin and a box are being fastened, screwing the pin into the box causes the shoulder surface of the pin to come into contact with the shoulder surface of the box. A contact timing of the shoulder surfaces is also called a shouldering. Subsequent to the shouldering, the pin is rotated slightly, which completes the fastening of the pin and the box. This causes the load flanks of the pin and the box to come into contact with each other strongly, generating a tightening axial force. In a state where the fastening is completed (hereinafter, referred to also as "fastened state"), the root of the external thread part is in contact with the crest of the internal thread part while interfering with the crest of the internal thread part. At the same time, a gap is formed between the crest of the external thread part and the root of the internal thread parts.

For enhancement of a sealing performance of the threaded connection, a seal surface is formed on an outer circumference of the pin, and a seal surface is formed on an inner circumference of the box. In a fastened state, the seal surface of the pin is in contact with the seal surface of the box while interfering with the seal surface of the box. The seal surfaces of the pin and the box interfere with and come into contact with each other to form a seal part of metallic contact. The seal part is disposed, for example, closer to a front edge of the pin than the thread part. This seal part is also called an inner seal part because the seal part is positioned near an inner portion of the threaded connection. The inner seal part contributes to a sealing performance against fluid inside the threaded connection. The seal part may be disposed on an opposite side of the thread part to the front edge of the pin. This seal part is also called an outer seal part because the seal part is positioned near an outer portion of the threaded connection. The outer seal part contributes to a sealing performance against fluid outside the threaded connection.

Here, in a case where a threaded connection includes both an inner seal part and an outer seal part, the following problem can arise. When a pin and a box are to be fastened, a lubricant is applied in advance to the pin and/or the box. This lubricant is compound grease and also called dope. If an amount of application of the dope is excessive, the dope is not discharged adequately in a process of the fastening, and a surplus of the dope is enclosed between an inner seal part and an outer seal part. As the fastening proceeds further, a gap between an external thread part and an internal thread part existing between the inner seal part and the outer seal part is narrowed. This increases a pressure of the dope enclosed between the inner seal part and the outer seal part. Such a pressure of the dope is also called dope pressure.

The dope pressure occurring at that time can reach several hundred MPa. In this case, the high dope pressure causes elastic deformation on the pin and/or the box, decreasing an amount of interference between the inner seal part and the outer seal part, which may decrease a sealing capability of the threaded connection. In particular, in a case of a threaded connection of a slim type or a flush type, in which a difference between an outer diameter of a box and an outer diameter of a pin main body is small, wall thicknesses of an inner seal part and an outer seal part are small, and thus there is a high risk of decrease in the sealing capability.

To address the increase in the dope pressure, various countermeasures are proposed. For example, Japanese Patent Application Publication No. 2000-314489 (Patent Literature 1) discloses a threaded connection for steel pipe in which a groove is formed on a thread ridge on one or both of an external thread part and an internal thread part, along a tube axis direction. In the threaded connection of Patent Literature 1, dope enclosed between a thread part and a seal part passes through the groove to be discharged from one of both ends of the thread part in the tube axis direction on which the seal part is not disposed. This suppresses the increase in the dope pressure.

However, if both an inner seal part and an outer seal part are provided on the threaded connection of Patent Literature 1, the discharge of the dope through the groove does not function. This is because the seal part is present at a position of the discharge of the dope through the groove on the thread part, and the dope is enclosed by this seal part. Therefore, even when the technique of Patent Literature 1 is applied to a threaded connection including both an inner seal part and an outer seal part, the increase in the dope pressure cannot be suppressed. In addition, in the threaded connection of Patent Literature 1, an edge appears on the groove on the thread ridges. This edge causes galling during fastening.

National Publication of International Patent Application No. 2012-510009 (Patent Literature 2) discloses a threaded connection for steel pipe that is provided with both an inner seal part and an outer seal part and is provided with a shoulder surface of a pin and a shoulder surface of a box within a region of a thread part. In the threaded connection of Patent Literature 2, angles of load flanks of an external thread part and an internal thread part are made negative with respect to a tube axis, and shoulder surfaces of a pin and a box are made negative with respect to the tube axis. This prevents dissipation of torque due to the dope pressure.

However, in the threaded connection of Patent Literature 2, once dope is enclosed between the inner seal part and the outer seal part during fastening, the increase in the dope pressure cannot be eliminated.

CITATION LIST

PATENT LITERATURE

Patent Literature 1: Japanese Patent Application Publication No. 2000-314489
Patent Literature 2: National Publication of International Patent Application No. 2012-510009

SUMMARY OF INVENTION

TECHNICAL PROBLEM

An objective of the present invention is to provide a threaded connection for steel pipe that is capable of suppressing an increase in dope pressure even in a case where both an inner seal part and an outer seal part are provided.

SOLUTION TO PROBLEM

A threaded connection for steel pipe according to an embodiment of the present invention includes a tubular pin and a tubular box that is to be fastened to the pin. The pin includes a taper external thread part, a pin inner seal surface, and a pin outer seal surface. The pin inner seal surface is disposed closer to a front edge of the pin than the taper external thread part. The pin outer seal surface is disposed on an opposite side of the taper external thread part to the front edge of the pin. The box includes a taper internal thread part, a box inner seal surface, and a box outer seal surface. The taper internal thread part corresponds to the taper external thread part. The box inner seal surface corresponds to the pin inner seal surface. The box outer seal surface corresponds to the pin outer seal surface. The pin and the box when fastened to each other include a thread part, an inner seal part, and an outer seal part. The thread part is formed of the taper external thread part and the taper internal thread part meshing with each other. The inner seal part is formed of the pin inner seal surface and the box inner seal surface being in contact with each other. The outer seal part is formed of the pin outer seal surface and the box outer seal surface being in contact with each other. In the threaded connection for steel pipe, a ratio value Lth of an amount of interference $\delta$th in the thread part with respect to $\tan(\theta\text{th})$ where $\theta$th is a gradient angle of the thread part, a ratio value Lint of an amount of interference $\delta$int in the inner seal part with respect to $\tan(\theta\text{int})$ where $\theta$int is a gradient angle of the inner seal part, and a ratio value Lext of an amount of interference $\delta$ext in the outer seal part with respect to $\tan(\theta\text{ext})$ where $\theta$ext is a gradient angle of the outer seal part satisfy the following Condition (1) or Condition (2).

$$\text{Lth} > \text{Lext and Lint} \neq \text{Lth} \qquad (1)$$

$$\text{Lth} > \text{Lint and Lext} \neq \text{Lth} \qquad (2)$$

ADVANTAGEOUS EFFECT OF INVENTION

With the threaded connection for steel pipe according to an embodiment of the present invention, the increase in dope pressure can be suppressed even in the case where both an inner seal part and an outer seal part are provided.

BRIEF DESCRIPTION OF DRAWINGS

[FIG. 1] FIG. 1 is a cross-sectional view illustrating an example of a threaded connection for steel pipe in a first embodiment.
[FIG. 2] FIG. 2 is a cross-sectional view illustrating an example of a thread part illustrated in FIG. 1 in an enlarging manner.
[FIG. 3] FIG. 3 is a cross-sectional view illustrating an inner seal part illustrated in FIG. 1 in an enlarging manner.
[FIG. 4] FIG. 4 is a cross-sectional view illustrating an outer seal part illustrated in FIG. 1 in an enlarging manner.
[FIG. 5] FIG. 5 is a timing diagram used for describing a fastening process on the threaded connection for steel pipe in the first embodiment.
[FIG. 6] FIG. 6 is a timing diagram used for describing a fastening process on a threaded connection for steel pipe in a second embodiment.
[FIG. 7] FIG. 7 is a timing diagram used for describing a fastening process on a threaded connection for steel pipe in a third embodiment.
[FIG. 8] FIG. 8 is a timing diagram used for describing a fastening process on a threaded connection for steel pipe in a fourth embodiment.
[FIG. 9] FIG. 9 is a timing diagram used for describing a fastening process on a threaded connection for steel pipe in a fifth embodiment.
[FIG. 10] FIG. 10 is a cross-sectional view illustrating an example of a threaded connection for steel pipe in a sixth embodiment.

DESCRIPTION OF EMBODIMENTS

Embodiments of the present invention will be described below. Although the following description will be made about the embodiments of the present invention as examples, the present invention is not limited to the examples described below. In the following description, specific numerical values and specific materials will be shown as examples, but the present invention is not limited to these examples.
To solve the problem described above, the present inventors made a close study of status of a threaded connection provided with both an inner seal part and an outer seal part during fastening. As a result, the following findings were obtained.
In a fastened state, a predetermined amount of interference is introduced in a thread part. During fastening, as a pin is screwed into a box, interference subject surfaces of the external thread part and the internal thread part (e.g., a root of the external thread part and a crest of the internal thread part) come into contact with each other. By this contact in the thread part, the introduction of the amount of interference into the thread part begins. When the screwing of the pin reaches the fastened state, the amount of interference in the thread part becomes a predetermined amount.
Similarly, a predetermined amount of interference is also introduced in the inner seal part in the fastened state. During fastening, as the pin is screwed into the box, the inner seal surfaces of the pin and the box come into contact with each other. By this contact in the inner seal part, the introduction of the amount of interference into the inner seal part begins. When the screwing of the pin reaches the fastened state, the amount of interference in the inner seal part becomes a predetermined amount.
Similarly, a predetermined amount of interference is also introduced in the outer seal part in the fastened state. During fastening, as the pin is screwed into the box, the outer seal surfaces of the pin and the box come into contact with each other. By this contact in the outer seal part, the introduction of the amount of interference into the outer seal part begins. When the screwing of the pin reaches the fastened state, the amount of interference in the outer seal part becomes a predetermined amount.
In the thread part, when a contact occurs during fastening, the introduction of the amount of interference begins, while dope can move back and forth. This is because there is a gap at least between non-interference subject surfaces of the external thread part and the internal thread part (e.g., a crest of the external thread part and a root of the internal thread part), and this gap extends over the entire thread part even in the fastened state. In contrast, in the inner seal part, the back-and-forth movement of the dope is blocked as the amount of interference is introduced when a contact occurs. Similarly, in the outer seal part, the back-and-forth movement of the dope is blocked as the amount of interference is introduced when a contact occurs.
Then, the followings can be said. In a case where the contact occurs in each of the inner seal part and the outer seal part before the contact occurs in the thread part, the dope has already been tightly enclosed between the inner seal part and the outer seal part when the contact occurs in the thread part, and an increase in a dope pressure has begun. This is because the dope present between the inner seal part and the outer seal part cannot be discharged. The fastening continuously proceeds to introduce the amount of interference into each of the thread part, the inner seal part, and the outer seal part. This further increases the dope pressure.
In summary, in this case, the dope is enclosed between the inner seal part and the outer seal part in an early stage of the fastening process. Therefore, an amount of the dope enclosed between the inner seal part and the outer seal part is large. This causes a further increase in the dope pressure.

Hence, the increase in the dope pressure can be suppressed if the amount of the dope enclosed between the inner seal part and the outer seal part during fastening is small. This can be achieved if the discharge of a surplus of the dope is promoted until a later stage of the fastening process.

Based on results of the study described above, the present inventors paid attention to contact timings in three parts of the thread part, the inner seal part, and the outer seal part during fastening.

In a case where the contact in the thread part occurs last, that is, in the case where the contact in each of the inner seal part and the outer seal part occurs before the contact in the thread part occurs, the amount of the dope enclosed between the inner seal part and the outer seal part is large, as described above.

In contrast to this, in a case where the contact in the outer seal part occurs last, the back-and-forth movement of the dope in the outer seal part is allowed until the last. Therefore, in a case where, for example, the contacts in the inner seal part, the thread part, and the outer seal part occur in this order, the following phenomenon occurs (Condition (A)). The dope is discharged through the thread part and the outer seal part in this order until a last contact occurs in the outer seal part.

In a case where, for example, the contact occurs in the thread part, the inner seal part, and the outer seal part in this order, the following phenomenon occurs (Condition (B)). Until the contact in the inner seal part occurs, the dope is discharged through both the inner seal part and the outer seal part. In addition, the dope is discharged through the thread part and the outer seal part in this order until the last contact occurs in the outer seal part.

For example, in a case where the contacts in the inner seal part and the outer seal part occur simultaneously after the contact in the thread part occurs, the following phenomenon occurs (Condition (C)). The dope is discharged through both the inner seal part and the outer seal part until the last contacts occur in the inner seal part and the outer seal part.

In addition, in a case where the contact in the inner seal part occurs last, the back-and-forth movement of the dope in the inner seal part is allowed until the last. Therefore, in a case where, for example, the contacts in the thread part, the outer seal part, and the inner seal part occur in this order, the following phenomenon occurs (Condition (D)). Until the contact in the outer seal part occurs, the dope is discharged through both the inner seal part and the outer seal part. In addition, the dope is discharged through the thread part and the inner seal part in this order until the last contact occurs in the inner seal part.

In a case where, for example, the contacts occur in the outer seal part, the thread part, and the inner seal part in this order, the following phenomenon occurs (Condition (E)). The dope is discharged through the thread part and the inner seal part in this order until the last contact occurs in the inner seal part.

In any of Condition (A) to Condition (E), the amount of the dope enclosed between the inner seal part and the outer seal part is small. This is because the dope is discharged until the contact in the inner seal part and/or the contact in the outer seal part occurs after the contact in the thread part occurs. That is, this is because the discharge of a surplus of the dope is promoted until a later stage of the fastening process. For that reason, the fastening continuously proceeds to introduce the amount of interference into each of the thread part, the inner seal part, and the outer seal part. Only after this, the dope pressure increases. The increase in the dope pressure can be therefore suppressed.

Condition (A) to Condition (E) can be satisfied if the contact in the thread part does not occur last of the contacts of the thread part, the inner seal part, and the outer seal part. That is, they can be satisfied if the contact in the thread part occurs before the contact in the outer seal part occurs (Condition (i)). Instead of this, they can be satisfied if the contact in the thread part occurs before the contact in the inner seal part occurs (Condition (ii)).

From another viewpoint, they can be satisfied if the contacts of the inner seal part and/or the outer seal part occur last of the contacts of the thread part, the inner seal part, and the outer seal part. That is, they can be satisfied if, in Condition (i), the contact in the inner seal part and the contact in the thread part do not occur simultaneously. In other words, they can be satisfied if, in Condition (i), the inner seal part and the thread part are different in terms of contact timing. Alternatively, they can be satisfied if, in Condition (ii), the contact in the outer seal part and the contact in the thread part do not occur simultaneously. In other words, they can be satisfied if, in Condition (ii), the outer seal part and the thread part are different in terms of contact timing. In any of Condition (i) and Condition (ii), it is preferable that the contact in the inner seal part and the contact in the outer seal part do not occur simultaneously. In other words, in any of Condition (i) and Condition (ii), they can be satisfied if the inner seal part and the outer seal part are different in terms of contact timing.

Here, in the thread part, a distance for which the pin is translated with respect to the box in the tube axis direction during fastening from the occurrence of the contact until the fastened state is equivalent to a ratio value Lth of an amount of interference $\delta$th in the thread part with respect to tan($\theta$th) where $\theta$th is a gradient angle of the thread part. This distance will be herein referred to also as thread-part translational distance Lth.

Similarly, in the inner seal part, a distance for which the pin is translated with respect to the box in the tube axis direction during fastening from the occurrence of the contact until the fastened state is equivalent to a ratio value Lint of an amount of interference $\delta$int in the inner seal part with respect to tan($\theta$int) where $\theta$int is a gradient angle of the inner seal part. This distance will be herein referred to also as inner-seal-part translational distance Lint.

Similarly, in the outer seal part, a distance for which the pin is translated with respect to the box in the tube axis direction during fastening from the occurrence of the contact until the fastened state is reached is equivalent to a ratio value Lext of an amount of interference $\delta$ext in the outer seal part with respect to $\tan(\theta$ext$)$ where $\theta$ext is a gradient angle of the outer seal part. This distance will be herein referred to also as outer-seal-part translational distance Lext.

End time points of the thread-part translational distance Lth, the inner-seal-part translational distance Lint, and the outer-seal-part translational distance Lext are at a time when the fastened state is reached. That is, these end time points are the same. In contrast, start time points of the thread-part translational distance Lth, the inner-seal-part translational distance Lint, and the outer-seal-part translational distance Lext are at times when the respective contacts occur.

Therefore, sizes of the thread-part translational distance Lth, the inner-seal-part translational distance Lint, and the outer-seal-part translational distance Lext serve as indices of the contact timings of the thread part, the inner seal part, and the outer seal part. Specifically, the greater the thread-part translational distance Lth, the earlier the contact timing in the thread part. Similarly, the greater the inner-seal-part translational distance Lint, the earlier the contact timing in the inner seal part. Similarly, the greater the outer-seal-part translational distance Lext, the earlier the contact timing in the outer seal part.

For example, in a case where the thread-part translational distance Lth is greater than the inner-seal-part translational distance Lint, the contact in the thread part occurs earlier than the contact in the inner seal part. In a case where the thread-part translational distance Lth is greater than the outer-seal-part translational distance Lext, the contact in the thread part occurs earlier than the contact in the outer seal part. In a case where the inner-seal-part translational distance Lint is greater than the outer-seal-part translational distance Lext, the contact in the inner seal part occurs earlier than the contact in the outer seal part. In a case where the outer-seal-part translational distance Lext is greater than the inner-seal-part translational distance Lint, the contact in the outer seal part occurs earlier than the contact in the inner seal part. In a case where the inner-seal-part translational distance Lint is the same as the outer-seal-part translational distance Lext, the contact in the inner seal part and the contact in the outer seal part occur simultaneously.

From the above, conditions for suppressing the increase in the dope pressure are as follows.

In Condition (i) shown above (the contact in the thread part occurs before the contact in the outer seal part occurs), the contact in the inner seal part and the contact in the thread part do not occur simultaneously. This condition can be expressed by the following Condition (1) using Lth, Lint, and Lext shown above.

$$Lth > Lext \text{ and } Lint \neq Lth \qquad (1)$$

In Condition (ii) shown above (the contact in the thread part occurs before the contact in the inner seal part occurs), the contact in the outer seal part and the contact in the thread part do not occur simultaneously. This condition can be expressed by the following Condition (2) using Lth, Lint, and Lext shown above.

$$Lth > Lint \text{ and } Lext \neq Lth \qquad (2)$$

Condition (1) includes Condition (A) shown above (the contacts occur in the inner seal part, the thread part, and the outer seal part in this order). This Condition (A) can be expressed as the following Condition (a), using Lth, Lint, and Lext shown above.

$$Lint > Lth > Lext \qquad (a)$$

Condition (1) includes Condition (B) shown above (the contacts occur in the thread part, the inner seal part, and the outer seal part in this order). This Condition (B) can be expressed as the following Condition (b), using Lth, Lint, and Lext shown above.

$$Lth > Lint > Lext \qquad (b)$$

Condition (1) includes Condition (C) shown above (the contact in the inner seal part and the contact in the outer seal part occur simultaneously after the contact in the thread part occurs). This Condition (C) can be expressed as the following Condition (c), using Lth, Lint, and Lext shown above.

$$Lth > Lint = Lext \qquad (c)$$

Condition (1) includes Condition (D) shown above (the contacts occur in the thread part, the outer seal part, and the inner seal part in this order). This Condition (D) can be expressed as the following Condition (d), using Lth, Lint, and Lext shown above.

$$Lth > Lext > Lint \qquad (d)$$

Condition (2) includes Condition (E) shown above (the contacts occur in the outer seal part, the thread part, and the inner seal part in this order). This Condition (E) can be expressed as the following Condition (e), using Lth, Lint, and Lext shown above.

$$Lext > Lth > Lint \qquad (e)$$

Condition (2) also includes Condition (B), Condition (C), and Condition (D) shown above. Therefore, Condition (2) also includes Condition (b), Condition (c), and Condition (d) shown above.

The present invention is completed based on the findings shown above.

A threaded connection for steel pipe according to an embodiment of the present invention includes a tubular pin and a tubular box that is to be fastened to the pin. The pin includes a taper external thread part, a pin inner seal surface, and a pin outer seal surface. The pin inner seal surface is disposed closer to a front edge of the pin than the taper external thread part. The pin outer seal surface is disposed on an opposite side of the taper external thread part to the front edge of the pin. The box includes a taper internal thread part, a box inner seal surface, and a box outer seal surface. The taper internal thread part corresponds to the taper external thread part. The box inner seal surface corresponds to the pin inner seal surface. The box outer seal surface corresponds to the pin outer seal surface. The pin and the box when fastened to each other include a thread part, an inner seal part, and an outer seal part. The thread part is formed of the taper external thread part and the taper internal thread part meshing with each other. The inner seal part is formed of the pin inner seal surface and the box inner seal surface being in contact with each other. The outer seal part is formed of the pin outer seal surface and the box outer seal surface being in contact with each other. In the threaded connection for steel pipe, a ratio value Lth of an amount of interference $\delta$th in the thread part with respect to tan($\theta$th) where $\theta$th is a gradient angle of the thread part, a ratio value Lint of an amount of interference $\delta$int in the inner seal part with respect to tan($\theta$int) where $\theta$int is a gradient angle of the inner seal part, and a ratio value Lext of an amount of interference $\delta$ext in the outer seal part with respect to tan($\theta$ext) where $\theta$ext is a gradient angle of the outer seal part satisfy the following Condition (1) or Condition (2).

$$\text{Lth>Lext and Lint≠Lth} \qquad (1)$$

$$\text{Lth>Lint and Lext≠Lth} \qquad (2)$$

In a case of Condition (1), the contact in the thread part occurs before the contact in the outer seal part occurs, and the contact in the inner seal part and the contact in the thread part do not occur simultaneously. In a case of Condition (2), the contact in the thread part occurs before the contact in the inner seal part occurs, and the contact in the outer seal part and the contact in the thread part do not occur simultaneously. In any of the cases of Condition (1) and Condition (2), the contact in the thread part does not occur last of the contacts of the thread part, the inner seal part, and the outer seal part. Therefore, the discharge of the surplus of the dope is promoted until a later stage of the fastening process. Consequently, with the threaded connection for steel pipe according to an embodiment, the increase in dope pressure can be suppressed even in the case where both an inner seal part and an outer seal part are provided.

In the case of Condition (1), Lint is greater than Lth in a typical example. In this case, Condition (1) is rewritten by the following Condition (a).

$$\text{Lint>Lth>Lext} \qquad (a)$$

In a case of Condition (a), the contacts occur in the inner seal part, the thread part, and the outer seal part in this order. Also in this case, the discharge of the surplus of the dope is promoted until a later stage of the fastening process. Moreover, in this case, the dope is discharged through the thread part and the outer seal part in this order until the last contact occurs in the outer seal part. That is, the dope is continually discharged to an outside of the threaded connection. In other words, the dope is not discharged to an inside of the threaded connection. This can prevent contamination of the inside of the threaded connection by the dope.

In another typical example, in the case of Condition (1), Lint is smaller than Lth. In this case, Condition (1) is rewritten by any one of the following Condition (b), Condition (c), and Condition (d).

$$\text{Lth>Lint>Lext} \qquad (b)$$

$$\text{Lth>Lint=Lext} \qquad (c)$$

$$\text{Lth>Lext>Lint} \qquad (d)$$

In a case of Condition (b), the contacts occur in the thread part, the inner seal part, and the outer seal part in this order. Also in this case, the discharge of the surplus of the dope is promoted until a later stage of the fastening process. In addition, in this case, until the contact in the inner seal part occurs, the dope is discharged through both the inner seal part and the outer seal part. In addition, the dope is discharged through the thread part and the outer seal part in this order until the last contact occurs in the outer seal part.

In a case of Condition (c), the contact in the inner seal part and the contact in the outer seal part occur simultaneously after the contact in the thread part occurs. Also in this case, the discharge of the surplus of the dope is promoted until a later stage of the fastening process. In addition, in this case, the dope is discharged through both the inner seal part and the outer seal part until the last contacts occur in the inner seal part and the outer seal part.

In a case of Condition (d), the contacts occur in the thread part, the outer seal part, and the inner seal part in this order. Also in this case, the discharge of the surplus of the dope is promoted until a later stage of the fastening process. In addition, in this case, until the contact in the outer seal part occurs, the dope is discharged through both the inner seal part and the outer seal part. In addition, the dope is discharged through the thread part and the inner seal part in this order until the last contact occurs in the inner seal part.

In still another typical example, in the case of Condition (2), Lext is greater than Lth. In this case, Condition (2) is rewritten by the following Condition (e).

$$Lext > Lth > Lint \qquad (e)$$

In the case of Condition (2), when Lext is smaller than Lth, Condition (2) is rewritten by any one of Condition (b), Condition (c), and Condition (d) shown above.

In a case of Condition (e), the contacts occur in the outer seal part, the thread part, and the inner seal part in this order. Also in this case, the discharge of the surplus of the dope is promoted until a later stage of the fastening process. Moreover, in this case, the dope is discharged through the thread part and the inner seal part in this order until the last contact occurs in the inner seal part. That is, the dope is continually discharged to the inside of the threaded connection. In other words, the dope is not discharged to the outside of the threaded connection. This can prevent contamination of the outside of the threaded connection by the dope.

The threaded connection for steel pipe may further include the following configuration. The pin includes a second taper external thread part. The second taper external thread part is disposed on an opposite side of the pin outer seal surface to the front edge of the pin. The box includes a second taper internal thread part. The second taper internal thread part corresponds to the second taper external thread part. The pin and the box when fastened to each other include a second thread part. The second thread part is formed of the second taper external thread part and the second taper internal thread part meshing with each other.

A specific example of a threaded connection for steel pipe according to the present embodiment will be described below with reference to the accompanying drawings.

[First Embodiment]

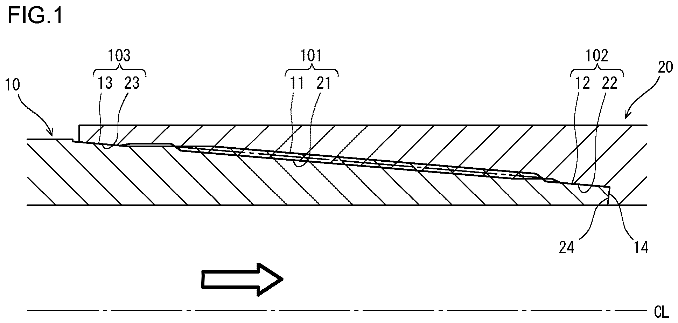

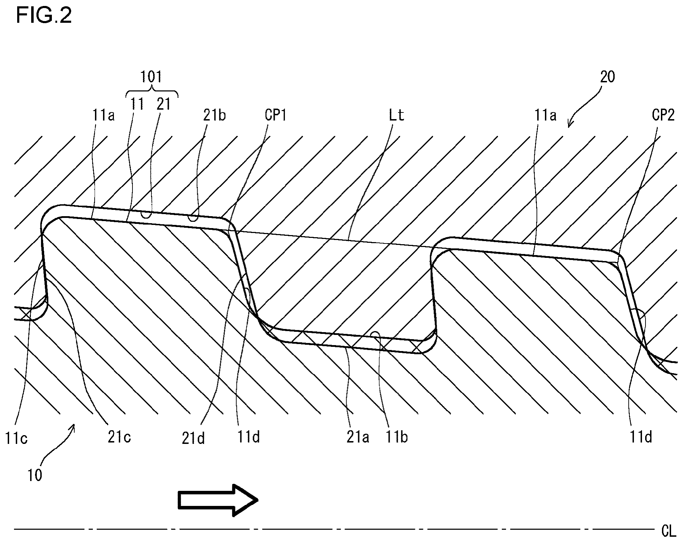

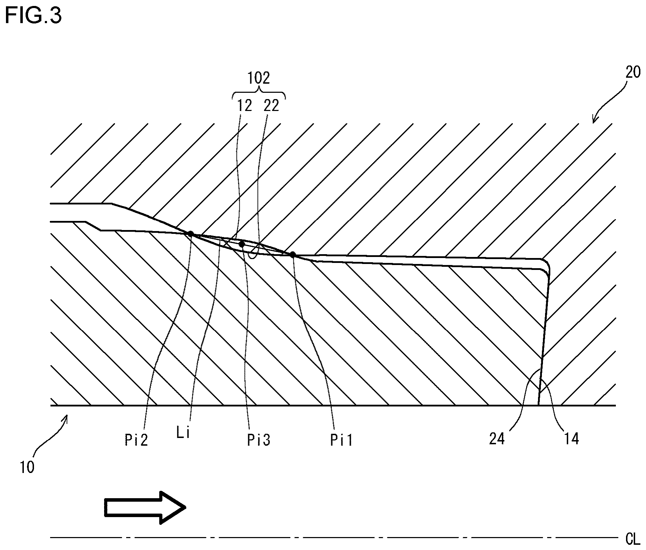

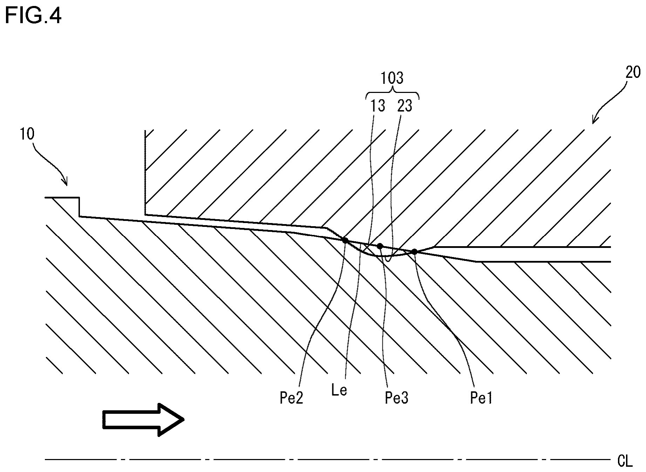

FIG. 1 is a cross-sectional view illustrating an example of a threaded connection for steel pipe in a first embodiment. FIG. 2 is a cross-sectional view illustrating an example of a thread part 101 illustrated in FIG. 1 in an enlarging manner. FIG. 3 is a cross-sectional view illustrating an inner seal part 102 illustrated in FIG. 1 in an enlarging manner. FIG. 4 is a cross-sectional view illustrating an outer seal part 103 illustrated in FIG. 1 in an enlarging manner. In each of FIG. 1 to FIG. 4, a solid-white arrow indicates a forward-screwing direction of a pin 10 with respect to a box 20. FIG. 1 to FIG. 4 each illustrate a longitudinal section including a tube axis CL of the threaded connection. FIG. 2 to FIG. 4 each illustrate a fastened state, that is, a state where fastening is completed. In FIG. 2 to FIG. 4, illustrated shapes of portions subjected to interference are shapes as designed before the interference, for the sake of convenience.

The threaded connection illustrated in FIG. 1 is a threaded connection of the coupling type. Referring to FIG. 1 to FIG. 4, the threaded connection includes the pin 10 and the box 20. The pin 10 and the box 20 are tubular.

The pin 10 includes an external thread part 11, a pin inner seal surface 12, a pin outer seal surface 13, and a pin shoulder surface 14. The external thread part 11, the pin inner seal surface 12, and the pin outer seal surface 13 are provided on an outer circumference of the pin 10. The external thread part 11 is a taper external thread part. The pin shoulder surface 14 is provided on a front edge of the pin 10. The pin inner seal surface 12 is disposed closer to the front edge of the pin 10 than the external thread part 11. That is, the pin inner seal surface 12 is provided between the external thread part 11 and the pin shoulder surface 14. The pin outer seal surface 13 is disposed on an opposite side of the external thread part 11 to the front edge of the pin 10. In summary, the pin inner seal surface 12, the external thread part 11, and the pin outer seal surface 13 are arranged in this order from a front edge of the pin 10 toward a pipe body of the pin 10. In the present embodiment, the pin inner seal surface 12 is disposed close to the front edge of the pin 10.

The box 20 includes an internal thread part 21, a box inner seal surface 22, a box outer seal surface 23, and a box shoulder surface 24. The internal thread part 21, the box inner seal surface 22, and the box outer seal surface 23 are provided on an inner circumference of the box 20. The internal thread part 21 is a taper internal thread part. The internal thread part 21 is disposed at a position corresponding to the external thread part 11. The internal thread part 21 can mesh with the external thread part 11. The box shoulder surface 24 is disposed at a position corresponding to the pin shoulder surface 14. The box shoulder surface 24 can be in contact with the pin shoulder surface 14. The box inner seal surface 22 is disposed at a position corresponding to the pin inner seal surface 12. The box inner seal surface 22 can be in contact with the pin inner seal surface 12. The box outer seal surface 23 is disposed at a position corresponding to the pin outer seal surface 13. The box outer seal surface 23 can be in contact with the pin outer seal surface 13. In summary, the box inner seal surface 22, the internal thread part 21, and the box outer seal surface 23 are arranged in this order from a pipe body of the box 20 toward a front edge of the box 20. In the present embodiment, the box outer seal surface 23 is disposed close to the front edge of the box 20.

The external thread part 11 and the internal thread part 21 mesh with each other to form the thread part 101. The pin inner seal surface 12 and the box inner seal surface 22 come into contact with each other to form the inner seal part 102. The pin outer seal surface 13 and the box outer seal surface 23 come into contact with each other to form the outer seal part 103. In summary, the inner seal part 102, the thread part 101, and the outer seal part 103 are arranged in this order from the front edge of the pin 10 toward the pipe body of the pin 10. The inner seal part 102 is closer to an inside of the threaded connection than the outer seal part 103 and therefore contributes to a sealing performance against fluid inside the threaded connection. The outer seal part 103 is closer to an outside of the threaded connection than the inner seal part 102 and therefore contributes to a sealing performance against fluid outside the threaded connection.

In the fastened state, the pin shoulder surface 14 is in strong contact with the box shoulder surface 24. In the longitudinal section of the threaded connection, the pin shoulder surface 14 is formed of a line. Similarly, the box shoulder surface 24 is formed of a line. The pin shoulder surface 14 inclines in the forward-screwing direction of the pin 10 with respect to the box 20. The box shoulder surface 24 inclines in such a manner as to correspond to the pin shoulder surface 14. However, the pin shoulder surface 14 may not incline and may incline in an opposite direction to the forward-screwing direction of the pin 10 with respect to the box 20.

The external thread part 11 of the pin 10 includes an external thread crest 11a, an external thread root 11b, a pin load flank 11c, and a pin stabbing flank 11d. The internal thread part 21 of the box 20 includes an internal thread crest 21a, an internal thread root 21b, a box load flank 21c, and a box stabbing flank 21d. As the thread part 101 illustrated in FIG. 2, a trapezoid thread typified by, for example, a buttress thread specified on the API standard is adopted.

Referring to FIG. 2, in the fastened state, there is a gap formed between the external thread crest 11a and the internal thread root 21b. In the longitudinal section of the threaded connection, segments of the external thread crest 11a lie on the same line over the entire area of the external thread part 11 in a direction of the tube axis CL. That is, the external thread crest 11a is tapered. Similarly, segments of the internal thread root 21b also lie on the same line and the internal thread root 21b is tapered.

In the fastened state, the external thread root 11b is in contact with the internal thread crest 21a while interfering with the internal thread crest 21a. In the longitudinal section of the threaded connection, segments of the external thread root 11b lie on the same line over the entire area of the external thread part 11 in the direction of the tube axis CL. That is, the external thread root 11b is tapered. Similarly, segments of the internal thread crest 21a also lie on the same line and the internal thread crest 21a is tapered.

In the fastened state, the pin load flank 11c is in strong contact with the box load flank 21c. In the longitudinal section of the threaded connection, the pin load flank 11c is formed of a line. Similarly, the box load flank 21c is formed of a line. The pin load flank 11c inclines in the opposite direction to the forward-screwing direction of the pin 10 with respect to the box 20. From another viewpoint, the pin load flank 11c inclines in a hook shape. The box load flank 21c inclines correspondingly to the pin load flank 11c. In this case, flank angles of the pin load flank 11c and the box load flank 21c are negative angles.

In the fastened state, a gap is formed between the pin stabbing flank 11d and the box stabbing flank 21d. In the longitudinal section of the threaded connection, the pin stabbing flank 11d is formed of a line. Similarly, the box stabbing flank 21d is formed of a line. The pin stabbing flank 11d inclines in the opposite direction to the forward-screwing direction of the pin 10 with respect to the box 20. The box stabbing flank 21d inclines correspondingly to the pin stabbing flank 11d. In this case, flank angles of the pin stabbing flank 11d and the box stabbing flank 21d are positive angles.

The gradient angle $\theta$th of the thread part 101 can be calculated as follows. In the longitudinal section of the threaded connection, connect an intersection CP1 between an extended line of an external thread crest 11a and an extended line of a pin stabbing flank 11d of a given thread ridge of the pin, and an intersection CP2 between an extended line of an external thread crest 11a and an extended line of a pin stabbing flank 11d in a thread ridge neighboring the given thread ridge, with a line Lt. An angle formed by this line Lt and the tube axis CL is the gradient angle $\theta$th of the thread part 101.

The amount of interference $\delta$th in the thread part 101 can be calculated by the following Formula (3).

$$\delta th = (Dp - Db)/2 \qquad (3)$$

Symbols in Formula (3) have the following meanings.

Dp: a designed diameter of the external thread root 11b at a given position in the tube axis CL direction before the interference; and
Db: a designed diameter of the internal thread crest 21a at the given position before the interference.

FIG. 2 illustrates a case where segments of the external thread crest 11a lie on the same line over the entire area of the external thread part 11 in the direction of the tube axis CL and the external thread crest 11a is tapered. Note that the external thread crest 11a may be formed like stairs along the direction of the tube axis CL of the external thread part 11. In this case, each segment of the external thread crest 11a is parallel to the tube axis CL. Also in this case, the gradient angle $\theta$th and the amount of interference $\delta$th in the thread part 101 can be calculated as described above.

In a case where the external thread crest 11a is formed like stairs, the external thread root 11b is also formed like stairs. Similarly, the internal thread crest 21a and the internal thread root 21b are also formed like stairs.

Referring to FIG. 3, in a fastened state, the pin inner seal surface 12 is in contact with the box inner seal surface 22 while interfering with the box inner seal surface 22. In the longitudinal section of the threaded connection, the pin inner seal surface 12 is formed of a convex curve. Similarly, the box inner seal surface 22 is formed of a convex curve. Overlapping portions between these curves are interference regions between the pin inner seal surface 12 and the box inner seal surface 22. The curves are circular arcs. The curves however may be curves other than the circular arcs (e.g., elliptic arcs) and, in addition, may be each formed of connected lines.

The gradient angle $\theta$int of the inner seal part 102 can be calculated as follows. In the longitudinal section of the threaded connection, the curve of the pin inner seal surface 12 and the curve of the box inner seal surface 22 intersect each other at two points Pi1 and Pi2. The two intersections Pi1 and Pi2 are connected with a line Li. Then, an angle formed by this line Li and the tube axis CL is the gradient angle $\theta$int of the inner seal part 102.

The amount of interference $\delta$int in the inner seal part 102 can be calculated by the following Formula (4).

$$\delta int=(Dip-Dib)/2 \qquad (4)$$

Symbols in Formula (4) have the following meanings.

Dip: a designed diameter of the pin inner seal surface 12 at a middle point Pi3 of the line Li before the interference; and
Dib: a designed diameter of the box inner seal surface 22 at the middle point Pi3 of the line Li before the interference.

In the longitudinal section of the threaded connection, one of the pin inner seal surface 12 and the box inner seal surface 22 may be formed of a line. In this case, the line Li can be drawn because the one line and the other curve intersect each other at two points. Therefore, the gradient angle $\theta$int and the amount of interference $\delta$int in the inner seal part 102 can be calculated.

Referring to FIG. 4, in a fastened state, the pin outer seal surface 13 is in contact with the box outer seal surface 23 while interfering with the box outer seal surface 23. In the longitudinal section of the threaded connection, the pin outer seal surface 13 is formed of a line. The box outer seal surface 23 is formed of a convex curve. Overlapping portions between the line and curve are interference regions between the pin outer seal surface 13 and the box outer seal surface 23. The curve is a circular arc. The curve however may be a curve other than the circular arc (e.g., an elliptic arc) and, in addition, may be formed of connected lines.

The gradient angle $\theta$ext of the outer seal part 103 can be calculated as follows. In the longitudinal section of the threaded connection, the line of the pin outer seal surface 13 and the curve of the box outer seal surface 23 intersect each other at two points Pe1 and Pe2. The two intersections Pe1 and Pe2 are connected with a line Le. Then, an angle formed by this line Le and the tube axis CL is the gradient angle $\theta$ext of the outer seal part 103.

The amount of interference $\delta$ext in the outer seal part 103 can be calculated by the following Formula (5).

$$\delta ext=(Dep-Deb)/2 \qquad (5)$$

Symbols in Formula (5) have the following meanings.

Dep: a designed diameter of the pin outer seal surface 13 at a middle point Pe3 of the line Le before the interference; and
Deb: a designed diameter of the box outer seal surface 23 at the middle point Pe3 of the line Le before the interference.

In the longitudinal section of the threaded connection, the pin outer seal surface 13 may be formed of a convex curve, and the box outer seal surface 23 may be formed of a line. Alternatively, the pin outer seal surface 13 and the box outer seal surface 23 may be both formed of convex curves. In this case, the line Le can be drawn because the two curves intersect each other at two points. Therefore, the gradient angle $\theta$ext and the amount of interference $\delta$ext in the outer seal part 103 can be calculated.

In the present embodiment, a ratio value Lth of an amount of interference $\delta$th in the thread part with respect to $\tan(\theta$th) where $\theta$th is a gradient angle of the thread part 101, a ratio value Lint of an amount of interference $\delta$int in the inner seal part with respect to $\tan(\theta$int) where $\theta$int is a gradient angle of the inner seal part, and a ratio value Lext of an amount of interference $\delta$ext in the outer seal part with respect to $\tan(\theta$ext) where $\theta$ext is a gradient angle of the outer seal part satisfy the above Condition (a) (Lint>Lth>Lext). In other words, the gradient angle $\theta$th, the amount of interference $\delta$th, the gradient angle $\theta$int, the amount of interference $\delta$int, the gradient angle $\theta$ext, and the amount of interference $\delta$ext are designed such that the above Condition (a) is satisfied.

The ratio value Lth is the thread-part translational distance Lth. The ratio value Lint is the inner-seal-part translational distance Lint. The ratio value Lext is the outer-seal-part translational distance Lext.

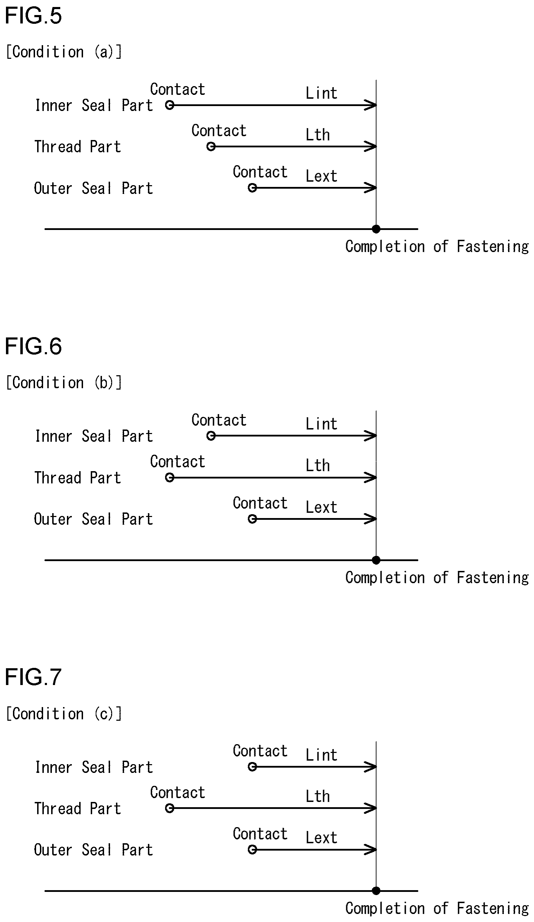

FIG. 5 is a timing diagram used for describing a fastening process on the threaded connection for steel pipe in the first embodiment. FIG. 5 illustrates contact timings and completion timings (times when the fastened state is reached) of the thread part, the inner seal part, and the outer seal part. That is, FIG. 5 illustrates the thread-part translational distance Lth, the inner-seal-part translational distance Lint, and the outer-seal-part translational distance Lext.

When the pin 10 and the box 20 are being fastened, screwing the pin 10 into the box 20 first causes the pin inner seal surface 12 to come into contact with the box inner seal surface 22. At that time, introduction of the amount of interference into the inner seal part 102 begins. Next, the external thread root 11b comes into contact with the internal thread crest 21a. At that time, introduction of the amount of interference into the thread part 101 begins. The pin outer seal surface 13 last comes into contact with the box outer seal surface 23. At that time, introduction of the amount of interference into the outer seal part 103 begins. A further screwing of the pin 10 continues the introductions of the amounts of interference into the thread part 101, the inner seal part 102, and the outer seal part 103.

The pin shoulder surface 14 then comes into contact with the box shoulder surface 24, causing a shouldering. Subsequent to the shouldering, the pin 10 is rotated slightly, which completes the fastening of the pin 10 and the box 20. This brings the amount of interferences of the thread part 101, the inner seal part 102, and the outer seal part 103 to the predetermined amounts of interference $\delta$th, $\delta$int, and $\delta$ext, respectively.

In this fastening, the contacts occur in the inner seal part 102, the thread part 101, and the outer seal part 103 in this order because the thread-part translational distance Lth, the inner-seal-part translational distance Lint, and the outer-seal-part translational distance Lext satisfy Condition (a). That is, the contact in the thread part 101 does not occur last of the thread part 101, the inner seal part 102, and the outer seal part 103. Therefore, the discharge of the surplus of the dope is promoted until a later stage of the fastening process. The increase in the dope pressure can be therefore suppressed.

Moreover, in this case, the dope is discharged through the thread part 101 and the outer seal part 103 in this order until the last contact occurs in the outer seal part 103. That is, the dope is continually discharged to an outside of the threaded connection. In other words, the dope is not discharged to an inside of the threaded connection. This can prevent contamination of the inside of the threaded connection by the dope.

[Second Embodiment]

FIG. 6 is a timing diagram used for describing a fastening process on a threaded connection for steel pipe in a second embodiment. FIG. 6 illustrates a situation similar to the situation illustrated in FIG. 5. The threaded connection in the second embodiment is one made by altering a shape of the threaded connection in the first embodiment. Description of a configuration that duplicates with that of the threaded connection in the first embodiment will be omitted. This holds true for embodiments described below.

In the present embodiment, the thread-part translational distance Lth, the inner-seal-part translational distance Lint, and the outer-seal-part translational distance Lext satisfy Condition (b) shown above (Lth>Lint>Lext). In other words, the gradient angle $\theta$th, the amount of interference $\delta$th, the gradient angle $\theta$int, the amount of interference $\delta$int, the gradient angle $\theta$ext, and the amount of interference $\delta$ext are designed such that Condition (b) shown above is satisfied.

When the pin 10 and the box 20 are being fastened, screwing the pin 10 into the box 20 first causes the external thread root 11b to come into contact with the internal thread crest 21a. At that time, introduction of the amount of interference into the thread part 101 begins. The pin inner seal surface 12 next comes into contact with the box inner seal surface 22. At that time, introduction of the amount of interference into the inner seal part 102 begins. The pin outer seal surface 13 last comes into contact with the box outer seal surface 23. At that time, introduction of the amount of interference into the outer seal part 103 begins. A further screwing of the pin 10 continues the introductions of the amounts of interference into the thread part 101, the inner seal part 102, and the outer seal part 103. Then, subsequent to the shouldering, the pin 10 is rotated slightly, which completes the fastening of the pin 10 and the box 20. This brings the amount of interferences of the thread part 101, the inner seal part 102, and the outer seal part 103 to the predetermined amounts of interference $\delta$th, $\delta$int, and $\delta$ext, respectively.

In this fastening, the contacts occur in the thread part 101, the inner seal part 102, and the outer seal part 103 in this order because the thread-part translational distance Lth, the inner-seal-part translational distance Lint, and the outer-seal-part translational distance Lext satisfy Condition (b). That is, the contact in the thread part 101 does not occur last of the thread part 101, the inner seal part 102, and the outer seal part 103. Therefore, the discharge of the surplus of the dope is promoted until a later stage of the fastening process. The increase in the dope pressure can be therefore suppressed.

In addition, in this case, until the contact in the inner seal part 102 occurs, the dope is discharged through both the inner seal part 102 and the outer seal part 103. In addition, the dope is discharged through the thread part 101 and the outer seal part 103 in this order until the last contact occurs in the outer seal part 103.

[Third Embodiment]

FIG. 7 is a timing diagram used for describing a fastening process on a threaded connection for steel pipe in a third embodiment.

In the present embodiment, the thread-part translational distance Lth, the inner-seal-part translational distance Lint, and the outer-seal-part translational distance Lext satisfy Condition (c) shown above (Lth>Lint=Lext). In other words, the gradient angle $\theta$th,

the amount of interference δth, the gradient angle θint, the amount of interference δint, the gradient angle θext, and the amount of interference δext are designed such that Condition (c) shown above is satisfied.

When the pin 10 and the box 20 are being fastened, screwing the pin 10 into the box 20 first causes the external thread root 11b to come into contact with the internal thread crest 21a. At that time, introduction of the amount of interference into the thread part 101 begins. The pin inner seal surface 12 next comes into contact with the box inner seal surface 22. At that time, introduction of the amount of interference into the inner seal part 102 begins. At the same time, the pin outer seal surface 13 comes into contact with the box outer seal surface 23. At that time, introduction of the amount of interference into the outer seal part 103 begins. A further screwing of the pin 10 continues the introductions of the amounts of interference into the thread part 101, the inner seal part 102, and the outer seal part 103. Then, subsequent to the shouldering, the pin 10 is rotated slightly, which completes the fastening of the pin 10 and the box 20. This brings the amount of interferences of the thread part 101, the inner seal part 102, and the outer seal part 103 to the predetermined amounts of interference δth, δint, and δext, respectively.

In this fastening, the contact in the inner seal part 102 and the contact in the outer seal part 103 occur simultaneously after the contact in the thread part 101 occurs because the thread-part translational distance Lth, the inner-seal-part translational distance Lint, and the outer-seal-part translational distance Lext satisfy Condition (c). That is, the contact in the thread part 101 does not occur last of the thread part 101, the inner seal part 102, and the outer seal part 103. Therefore, the discharge of the surplus of the dope is promoted until a later stage of the fastening process. The increase in the dope pressure can be therefore suppressed.

In addition, in this case, the dope is discharged through both the inner seal part 102 and the outer seal part 103 until the last contacts occur in the inner seal part 102 and the outer seal part 103.

[Fourth Embodiment]

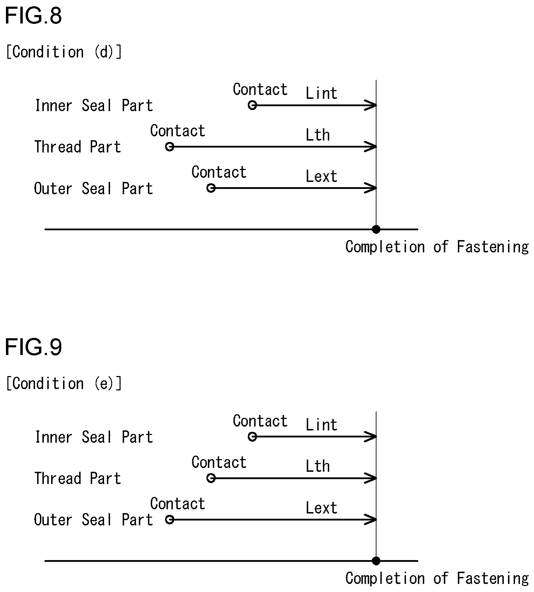

FIG. 8 is a timing diagram used for describing a fastening process on a threaded connection for steel pipe in a fourth embodiment.

In the present embodiment, the thread-part translational distance Lth, the inner-seal-part translational distance Lint, and the outer-seal-part translational distance Lext satisfy Condition (d) shown above (Lth>Lext>Lint). In other words, the gradient angle θth, the amount of interference δth, the gradient angle θint, the amount of interference δint, the gradient angle θext, and the amount of interference δext are designed such that Condition (d) shown above is satisfied.

When the pin 10 and the box 20 are being fastened, screwing the pin 10 into the box 20 first causes the external thread root 11b to come into contact with the internal thread crest 21a. At that time, introduction of the amount of interference into the thread part 101 begins. The pin outer seal surface 13 next comes into contact with the box outer seal surface 23. At that time, introduction of the amount of interference into the outer seal part 103 begins. The pin inner seal surface 12 last comes into contact with the box inner seal surface 22. At that time, introduction of the amount of interference into the inner seal part 102 begins. A further screwing of the pin 10 continues the introductions of the amounts of interference into the thread part 101, the inner seal part 102, and the outer seal part 103. Then, subsequent to the shouldering, the pin 10 is rotated slightly, which completes the fastening of the pin 10 and the box 20. This brings the amount of interferences of the thread part 101, the inner seal part 102, and the outer seal part 103 to the predetermined amounts of interference δth, δint, and δext, respectively.

In this fastening, the contacts occur in the thread part 101, the outer seal part 103, and the inner seal part 102 in this order because the thread-part translational distance Lth, the inner-seal-part translational distance Lint, and the outer-seal-part translational distance Lext satisfy Condition (d). That is, the contact in the thread part 101 does not occur last of the thread part 101, the inner seal part 102, and the outer seal part 103. Therefore, the discharge of the surplus of the dope is promoted until a later stage of the fastening process. The increase in the dope pressure can be therefore suppressed.

In addition, in this case, until the contact in the outer seal part 103 occurs, the dope is discharged through both the inner seal part 102 and the outer seal part 103. In addition, the dope is discharged through the thread part 101 and the inner seal part 102 in this order until the last contact occurs in the inner seal part 102.

[Fifth Embodiment]

FIG. 9 is a timing diagram used for describing a fastening process on a threaded connection for steel pipe in a fifth embodiment.

In the present embodiment, the thread-part translational distance Lth, the inner-seal-part translational distance Lint, and the outer-seal-part translational distance Lext satisfy Condition (e) shown above (Lext>Lth>Lint). In other words, the gradient angle θth, the amount of interference δth, the gradient angle θint, the amount of interference δint, the gradient angle θext, and the amount of interference δext are designed such that Condition (e) shown above is satisfied.

When the pin 10 and the box 20 are being fastened, screwing the pin 10 into the box 20 first causes the pin outer seal surface 13 to come into contact with the box outer seal surface 23. At that time, introduction of the amount of interference into the outer seal part 103 begins. Next, the external thread root 11b comes into contact with the internal thread crest 21a. At that time, introduction of the amount of interference into the thread part 101 begins. The pin inner seal surface 12 last comes into contact with the box inner seal surface 22. At that time, introduction of the amount of interference into the inner seal part 102 begins. A further screwing of the pin 10 continues the introductions of the amounts of interference into the thread part 101, the inner seal part 102, and the outer seal part 103. Then, subsequent to the shouldering, the pin 10 is rotated slightly, which completes the fastening of the pin 10 and the box 20. This brings the amount of interferences of the thread part 101, the inner seal part 102, and the outer seal part 103 to the predetermined amounts of interference δth, δint, and δext, respectively.

In this fastening, the contacts occur in the outer seal part 103, the thread part 101, and the inner seal part 102 in this order because the thread-part translational distance Lth, the inner-seal-part translational distance Lint, and the outer-seal-part translational distance Lext satisfy Condition (e). That is, the contact in the thread part 101 does not occur last of the thread part 101, the inner seal part 102, and the outer seal part 103. Therefore, the discharge of the surplus of the dope is promoted until a later stage of the fastening process. The increase in the dope pressure can be therefore suppressed.

Moreover, in this case, the dope is discharged through the thread part 101 and the inner seal part 102 in this order until the last contact occurs in the inner seal part 102. That is, the dope is continually discharged to the inside of the threaded connection. In other words, the dope is not discharged to the outside of the threaded connection. This can prevent contamination of the outside of the threaded connection by the dope.

[Sixth Embodiment]

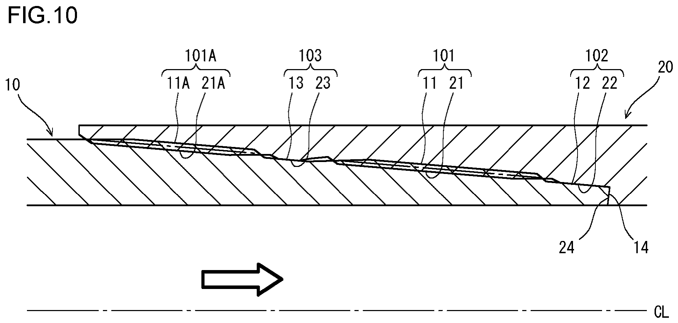

FIG. 10 is a cross-sectional view illustrating an example of a threaded connection for steel pipe in a sixth embodiment. The threaded connection in the sixth embodiment differs from the threaded connection in the first embodiment in that the threaded connection in the sixth embodiment has a configuration that includes a second thread part 101A in addition to the thread part 101.

Specifically, the threaded connection in the present embodiment illustrated in FIG. 10 includes, as in the first embodiment, an inner seal part 102, a thread part 101, and an outer seal part 103 in this order from a front edge of a pin 10 toward a pipe body of the pin 10. The threaded connection in the present embodiment further includes a second thread part 101A in addition to the thread part 101. That is, the threaded connection in the present embodiment includes two thread parts. The thread part 101 is separate from the second thread part 101A and therefore can be called a first thread part 101. The second thread part 101A is disposed on an opposite side of the outer seal part 103 to the front edge of the pin 10. In summary, the inner seal part 102, the thread part 101, the outer seal part 103, and the second thread part 101A are arranged in this order from the front edge of the pin 10 toward the pipe body of the pin 10.

The outer seal part 103 is closer to an outside of the threaded connection than the inner seal part 102. The outer seal part 103 therefore contributes to a sealing performance against fluid outside the threaded connection. The outer seal part 103 is present between the first thread part 101 and the second thread part 101A and therefore can be called an intermediate seal portion.

The second thread part 101A has the same configuration as the thread part 101 in the first embodiment (the first thread part 101). Specifically, the second thread part 101A is formed of a second external thread part 11A and a second internal thread part 21A. The pin 10 includes the second external thread part 11A, and the box 20 includes the second internal thread part 21A. The second external thread part 11A is a taper external thread part and provided on an outer circumference of the pin 10. The second internal thread part 21A is a taper internal thread part and provided on an inner circumference of the box 20. The second internal thread part 21A is disposed at a position corresponding to the second external thread part 11A. The second external thread part 11A and the second internal thread part 21A mesh with each other to form the second thread part 101A.

A size of a taper of the second thread part 101A is the same as, for example, a size of a taper of the first thread part 101. However, the size of the taper of the second thread part 101A may be larger than the size of the taper of the first thread part 101 or may be smaller than the size of the taper of the first thread part 101. The taper means a shape with an inclination that forms angles with the tube axis CL on both sides of the tube axis CL. Therefore, in the first thread part 101, an angle obtained by converting half the taper into an angle is equivalent to the gradient angle θth.

The threaded connection with such a configuration also provides the same effects as those of the first embodiment. The second thread part 101A in the sixth embodiment may be applied to the threaded connections in the second to fifth embodiments.

The present invention is not limited to the embodiments described above, and various modifications may be made without departing from the scope of the present invention. For example, the threaded connection may be of either of the coupling type and the integral type.

In addition, as the thread part, a dovetail screw may be adopted. In this case, flank angles of the pin stabbing flank and the box stabbing flank are negative angles. In this case, in the fastened state, the pin stabbing flank is in strong contact with the box stabbing flank. That is, the external thread part and the internal thread part mesh with each other strongly in a wedge shape. A time when the external thread part and the internal thread part mesh with each other strongly in a wedge shape during fastening is called locking. The locking corresponds to shouldering.

In addition, in the fastened state, there may be a gap formed between the external thread root 11b and the internal thread crest 21a, and the external thread crest 11a may be in contact with the internal thread root 21b while interfering with the internal thread root 21b.

INDUSTRIAL APPLICABILITY

The threaded connection according to the present invention is effectively available for connecting steel pipes used as oil country tubular goods.

REFERENCE SIGNS LIST

    101: thread part
    102: inner seal part
    103: outer seal part
    101A: second thread part
    10: pin
    11: external thread part
    11a: external thread crest
    11b: external thread root
    11c: pin load flank
    11d: pin stabbing flank
    12: pin inner seal surface
    13: pin outer seal surface
    14: pin shoulder surface
    11A: second external thread part
    20: box
    21: internal thread part
    21a: internal thread crest
    21b: internal thread root
    21c: box load flank
    21d: box stabbing flank
    22: box inner seal surface
    23: box outer seal surface
    24: box shoulder surface
    21A: second internal thread part
    CL: tube axis

**Claims**

1. A threaded connection for steel pipe, comprising:

    a tubular pin that includes a taper external thread part, a pin inner seal surface disposed closer to a front edge of the pin than the taper external thread part, and a pin outer seal surface disposed on an opposite side of the taper external thread part to the front edge of the pin; and a tubular box that is to be fastened to the pin and includes a taper internal thread part corresponding to the taper external thread part, a box inner seal surface corresponding to the pin inner seal surface, and a box outer seal surface corresponding to the pin outer seal surface, wherein

the pin and the box when fastened to each other include:

    a thread part that is formed of the taper external thread part and the taper internal thread part meshing with each other;
    an inner seal part that is formed of the pin inner seal surface and the box inner seal surface being in contact with each other; and
    an outer seal part that is formed of the pin outer seal surface and the box outer seal surface being in contact with each other, and

a ratio value Lth of an amount of interference $\delta$th in the thread part with respect to tan($\theta$th) where $\theta$th is a gradient angle of the thread part, a ratio value Lint of an amount of interference $\delta$int in the inner seal part with respect to tan($\theta$int) where $\theta$int is a gradient angle of the inner seal part, and a ratio value Lext of an amount of interference $\delta$ext in the outer seal part with respect to tan($\theta$ext) where $\theta$ext is a gradient angle of the outer seal part satisfy following one of Condition (1) and Condition (2).

$$Lth > Lext \text{ and } Lint \neq Lth \qquad (1)$$

$$Lth > Lint \text{ and } Lext \neq Lth \qquad (2)$$

2. The threaded connection for steel pipe according to claim 1, wherein in a case of Condition (1), Lint is greater than Lth.

3. The threaded connection for steel pipe according to claim 1, wherein in a case of Condition (2), Lext is smaller than Lth.

4. The threaded connection for steel pipe according to any one of claims 1 to 3, wherein

    the pin includes a second taper external thread part that is disposed on an opposite side of the pin outer seal surface to the front edge of the pin, the box includes a second taper internal thread part that corresponds to the second taper external thread part, and the pin and the box when fastened to each other include a second thread part that is formed of the second taper external thread part and the second taper internal thread part meshing with each other.

FIG.1

FIG.2

FIG.3

FIG.4

# FIG.5

[Condition (a)]

Inner Seal Part    Contact ⊸——————————→ Lint

Thread Part    Contact ⊸——————————→ Lth

Outer Seal Part    Contact ⊸——————————→ Lext

Completion of Fastening

# FIG.6

[Condition (b)]

Inner Seal Part    Contact ⊸——————————→ Lint

Thread Part    Contact ⊸——————————→ Lth

Outer Seal Part    Contact ⊸——————————→ Lext

Completion of Fastening

# FIG.7

[Condition (c)]

Inner Seal Part    Contact ⊸——————————→ Lint

Thread Part    Contact ⊸——————————→ Lth

Outer Seal Part    Contact ⊸——————————→ Lext

Completion of Fastening

## FIG.8

[Condition (d)]

Inner Seal Part — Contact — Lint

Thread Part — Contact — Lth

Outer Seal Part — Contact — Lext

Completion of Fastening

## FIG.9

[Condition (e)]

Inner Seal Part — Contact — Lint

Thread Part — Contact — Lth

Outer Seal Part — Contact — Lext

Completion of Fastening

FIG.10

## INTERNATIONAL SEARCH REPORT

| International application No. |
|---|
| **PCT/JP2023/033179** |

| A. | CLASSIFICATION OF SUBJECT MATTER |
|---|---|

*F16L 15/04*(2006.01)i; *E21B 17/00*(2006.01)i
FI:  F16L15/04 A; E21B17/00

According to International Patent Classification (IPC) or to both national classification and IPC

| B. | FIELDS SEARCHED |
|---|---|

Minimum documentation searched (classification system followed by classification symbols)

F16L15/04; E21B17/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2018-501446 A (VALLOUREC OIL AND GAS FRANCE) 18 January 2018 (2018-01-18) entire text, all drawings | 1-4 |
| A | JP 06-050476 A (KAWASAKI STEEL CORP.) 22 February 1994 (1994-02-22) entire text, all drawings | 1-4 |
| A | JP 06-011078 A (KAWASAKI STEEL CORP.) 21 January 1994 (1994-01-21) entire text, all drawings | 1-4 |
| A | JP 2015-001252 A (JFE STEEL CORP.) 05 January 2015 (2015-01-05) entire text, all drawings | 1-4 |
| A | JP 10-089555 A (SUMITOMO METAL INDUSTRIES, LTD.) 10 April 1998 (1998-04-10) entire text, all drawings | 1-4 |
| A | WO 2017/213048 A1 (NIPPON STEEL & SUMITOMO METAL CORPORATION) 14 December 2017 (2017-12-14) entire text, all drawings | 1-4 |

✓ Further documents are listed in the continuation of Box C.     ✓ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **20 November 2023** | **05 December 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2023/033179**

### C. DOCUMENTS CONSIDERED TO BE RELEVANT

| Category* | Citation of document, with indication, where appropriate, of the relevant passages | Relevant to claim No. |
|---|---|---|
| A | WO 2015/194160 A1 (NIPPON STEEL & SUMITOMO METAL CORPORATION) 23 December 2015 (2015-12-23) entire text, all drawings | 1-4 |

Form PCT/ISA/210 (second sheet) (January 2015)

**INTERNATIONAL SEARCH REPORT**
Information on patent family members

International application No.

**PCT/JP2023/033179**

| Patent document cited in search report | | | Publication date (day/month/year) | Patent family member(s) | | | Publication date (day/month/year) |
|---|---|---|---|---|---|---|---|
| JP | 2018-501446 | A | 18 January 2018 | US | 2018/0283109 | A1 | |
| | | | | entire text, all drawings | | | |
| | | | | WO | 2016/097049 | A1 | |
| | | | | EP | 3234298 | A1 | |
| | | | | CN | 107002471 | A | |
| JP | 06-050476 | A | 22 February 1994 | (Family: none) | | | |
| JP | 06-011078 | A | 21 January 1994 | (Family: none) | | | |
| JP | 2015-001252 | A | 05 January 2015 | US | 2016/0123091 | A1 | |
| | | | | entire text, all drawings | | | |
| | | | | WO | 2014/199620 | A1 | |
| | | | | EP | 2977662 | A1 | |
| JP | 10-089555 | A | 10 April 1998 | (Family: none) | | | |
| WO | 2017/213048 | A1 | 14 December 2017 | US | 2019/0093799 | A1 | |
| | | | | entire text, all drawings | | | |
| | | | | EP | 3470720 | A1 | |
| | | | | CN | 108779881 | A | |
| WO | 2015/194160 | A1 | 23 December 2015 | US | 2017/0101830 | A1 | |
| | | | | entire text, all drawings | | | |
| | | | | EP | 3159591 | A1 | |
| | | | | CN | 106461127 | A | |

Form PCT/ISA/210 (patent family annex) (January 2015)

## REFERENCES CITED IN THE DESCRIPTION

**Patent documents cited in the description**

- JP 2000314489 A

- WO 2012510009 A